(19) Europäisches Patentamt
European Patent Office
Office européen des brevets

(11) Veröffentlichungsnummer: **0 039 008**
**B1**

(12) # EUROPÄISCHE PATENTSCHRIFT

(45) Veröffentlichungstag der Patentschrift: **25.05.83**

(51) Int. Cl.³: **C 09 D 3/82,** C 09 D 5/10, C 08 K 5/54

(21) Anmeldenummer: **81102927.1**

(22) Anmeldetag: **16.04.81**

(54) **Überzugsmittel.**

(30) Priorität: **18.04.80 DE 3015063**

(43) Veröffentlichungstag der Anmeldung: **04.11.81 Patentblatt 81/44**

(45) Bekanntmachung des Hinweises auf die Patenterteilung: **25.05.83 Patentblatt 83/21**

(84) Benannte Vertragsstaaten: **BE DE FR GB NL SE**

(56) Entgegenhaltungen:
**BE-A-655 000**
**DE-A-2 004 837**
**FR-A-2 390 482**
**GB-A-1 035 492**

(73) Patentinhaber: **WACKER-CHEMIE GMBH, Prinzregentenstrasse 22, D-8000 München 22 (DE)**

(72) Erfinder: **Deubzer, Bernward, Dr., Dipl.-Chem., Virchowstrasse 14, D-8263 Burghausen (DE)**
Erfinder: **Sallersbeck, Konrad, Schiessplatzweg 24, D-8263 Burghausen (DE)**
Erfinder: **Brunner, Erich, Gschwandt 70, A-4810 Gmunden (AT)**

**EP 0 039 008 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Überzugsmittel

Überzugsmittel auf Grundlage von Kieselsäurealkylester, teilchenförmigem Zink und Härtungskatalysator in organischem Lösungsmittel sind bereits bekannt. Hierzu sei z. B. auf US-A-3 859 101, ausgegeben 7. Januar 1975, W. W. Slater, Celanese Coating & Specialties Company, und DE-AS 2 051 682, bekanntgemacht 16. Juni 1976, Ameron Inc., wonach als Härtungskatalysator Monoethanolamin bzw. u. a. Triäthanolamin verwendet wird, verwiesen. Gegenüber vergleichbaren Überzugsmitteln, die bereits bekannt sind, haben die erfindungsgemäßen Überzugsmittel insbesondere die Vorteile, daß bei ihrer Herstellung die Auswahl unter den dabei verwendbaren organischen Lösungsmitteln größer ist und keine physiologisch bedenklichen oder übelriechenden Stoffe eingesetzt werden müssen und/oder bei ihrer Lagerung keine Gasentwicklung durch Umsetzung des Zinks mit einem anderen Bestandteil der Überzugsmittel auftritt, bei ihrer Lagerung in verschlossenem Behälter Viskosität und Härtungsgeschwindigkeit der Überzugsmittel gleichbleiben und sich keine harten, nicht mehr oder nur schwer aufrührbare Niederschläge bilden und daß sie trotzdem bei ihrer Anwendung rasch bei Raumtemperatur härten.

Gemäß GB-A-1 035 492 und BE-A-655 000 werden in den endständigen Einheiten je eine Si-gebundene Hydroxylgruppe aufweisende Diorganopolysiloxane mittels Umsetzungsprodukten aus Alkoxysilan und einem Alkanolamin, nämlich Diethanolamin bzw. z. B. Monoethanolamin, zu Elastomeren vernetzt oder gehärtet. Dabei müssen diese Umsetzungsprodukte die zur Vernetzung oder Härtung von Diorganopolysiloxanen bei Raumtemperatur im Sinne von z. B. W. Noll, Chemie und Technologie der Silane, 2. Auflage, Weinheim 1968, Seite 339, erforderlichen Siliciumatome ohne oder mit nur einem daran SiC-gebundenen Kohlenwasserstoffrest liefern. Kieselsäurealkylester und Alkylkieselsäurealkylester bestehen jedoch bereits aus Siliciumatomen ohne bzw. mit nur einem daran SiC-gebundenen Kohlenwasserstoffrest. Folglich benötigen sie zu ihrer Vernetzung oder Härtung keinen Zusatz solcher Siliciumatome. Somit konnten GB-A-1 035 492 und BE-A-655 000 den Gegenstand der Erfindung nicht nahelegen.

Gegenstand der Erfindung sind Überzugsmittel auf Grundlage von Kieselsäurealkylester und/oder Alkylkieselsäurealkylester, teilchenförmigem Zink und Härtungskatalysator in organischem Lösungsmittel, dadurch gekennzeichnet, daß sie als Härtungskatalysator mindestens eine Verbindung aus der Klasse der Triptych-Siloxazolidine enthalten.

Der hier in Beschreibung und Patentansprüchen verwendete Ausdruck »Kieselsäurealkylester und/oder Alkylkieselsäurealkylester« soll sowohl monomere Verbindungen, also Tetraalkoxysilane oder Orthoalkylsilikate oder Orthokieselsäurealkylester bzw. Alkyltrialkoxysilane, als auch Hexaalkoxydisiloxane und Alkoxypolysiloxane bzw. Alkylalkoxypolysiloxane umfassen.

Als Kieselsäurealkylester bzw. Alkylkieselsäurealkylester können auch in den erfindungsgemäßen Überzugsmitteln alle Kieselsäurealkylester und/oder Alkylkieselsäurealkylester vorliegen, die in den bisher bekannten Überzugsmitteln auf Grundlage von Kieselsäurealkylester und/oder Alkylkieselsäurealkylester, teilchenförmigem Zink und Härtungskatalysator in organischem Lösungsmittel vorliegen konnten.

Beispiele für Alkoxygruppen in den Kieselsäurealkylestern und/oder Alkylkieselsäurealkylestern sind die Methoxy-, Äthoxy-, n-Propoxy-, Isopropoxy- und die n-Butoxygruppe.

Einzelne Beispiele für Kieselsäurealkylester sind Tetraethylsilikat und Tetra-n-propylsilikat.

Beispiele für Alkylkieselsäurealkylester sind Methyltriethoxysilan und Ethyltriethoxysilan.

Wegen der verhältnismäßig leichten Zugänglichkeit, leichten Hydrolysierbarkeit und der physiologischen Unbedenklichkeit des bei der Hydrolyse abgespaltenen Ethanols haben die Ethoxygruppen zumindest bis jetzt bei weitem die größte Bedeutung als Alkoxygruppen in Kieselsäurealkylestern und Alkylkieselsäurealkylestern in Überzugsmitteln auf Grundlage von Kieselsäurealkylester und/oder Alkylkieselsäurealkylester, teilchenförmigem Zink und Härtungskatalysator.

Beispiele für Alkylalkoxypolysiloxane sind Methylethoxypolysiloxane und Ethylethoxypolysiloxane.

Bevorzugt sind Alkoxypolysiloxane, wie das Ethoxypolysiloxan mit einem $SiO_2$-Gehalt von etwa 40 Gewichtsprozent, das unter der Bezeichnung »Äthylsilikat 40« oder »Ethylsilikat 40« bekannt ist und gemäß »Ullmanns Enzyklopädie der technischen Chemie«, Band 15, München—Berlin, 1964, Seite 765, im wesentlichen aus Dodecaethoxypentasiloxan besteht.

Es kann eine Art von Kieselsäurealkylester oder Alkylkieselsäurealkylester verwendet werden. Es können aber auch Gemische aus hinsichtlich ihrer Alkoxygruppen und/oder hinsichtlich ihres Polymerisationsgrades verschiedenen Kieselsäurealkylestern und/oder Alkylkieselsäurealkylestern verwendet werden.

Als teilchenförmiges Zink kann auch in den erfindungsgemäßen Überzugsmitteln teilchenförmiges Zink der gleichen Art, nämlich Zinkstaub oder Zinkpulver, und in den gleichen Mengen vorliegen, wie in den bisher bekannten Überzugsmitteln auf Grundlage von Kieselsäurealkylester, teilchenförmigem Zink und Härtungskatalysator in organischem Lösungsmittel. Bevorzugt sind 60 bis 95 Gewichtsprozent teilchenförmiges Zink, bezogen auf das Gesamtgewicht des jeweiligen Überzugsmittels, abzüglich des Gewichts von darin enthaltenem Lösungsmittel.

Als organisches Lösungsmittel kann ebenfalls

auch in den erfindungsgemäßen Überzugsmitteln organisches Lösungsmittel der gleichen Art und in den gleichen Mengen vorliegen, wie in den bisher bekannten Überzugsmitteln auf Grundlage von Kieselsäurealkylester, teilchenförmigem Zink und Härtungskatalysator in organischem Lösungsmittel. Beispiele für geeignete organische Lösungsmittel sind Alkane mit Siedepunkten im Bereich von 120 bis 180°C bei 1020 mbar, Toluol, Xylole, Trimethylbenzole und ein im Handel unter der Bezeichnung »Deasol 99« (die Bezeichnung »Deasol« ist ein registriertes Warenzeichen) erhältliches Lösungsmittelgemisch mit einem Siedebereich von 155 bis 175°C bei 1020 mbar, das zu 99 Gewichtsprozent aus Aromaten mit 9 oder 10 Kohlenstoffatomen je Molekül besteht; Ketone, wie Methylethylketon; Ester, wie Ethylazetat und Ethylglykolazetat, und Ether, wie Ethyldiglykol. Es kann eine Art von organischem Lösungsmittel verwendet werden. Es können aber auch Gemische von verschiedenen organischen Lösungsmitteln verwendet werden.

Vorzugsweise enthalten die erfindungsgemäßen Überzugsmittel organisches Lösungsmittel in Mengen von 50 bis 1000 Gewichtsprozent, bezogen auf das Gesamtgewicht von Kieselsäurealkylester und Alkylkieselsäurealkylester.

Die erfindungsgemäß als Härtungskatalysatoren verwendeten Triptych-Siloxazolidine werden auch als Silatrane bezeichnet. Es handelt sich dabei um z. B. aus The Journal of the American Chemical Society, Band 83 (1961), Seite 996 und 997, bekannte Verbindungen. Sie sind durch Umsetzung von monomeren und/oder polymeren Siliciumverbindungen, welche mindestens eine Gruppierung

$$-Si(OR)_3$$

aufweisen, wobei R vorzugsweise einen Alkylrest mit 1 bis 4 Kohlenstoffatomen bedeutet, mit mindestens einem Trialkanolamin im Molverhältnis von 1 : 1 unter Abdestillieren des dabei entstandenen Alkanols der Formel ROH, wobei R die vorstehend dafür angegebene Bedeutung hat, leicht erhältlich.

Bei den für die Herstellung der erfindungsgemäß als Härtungskatalysatoren verwendeten Triptych-Siloxazolidine eingesetzten Siliciumverbindungen kann es sich z. B. um solche der allgemeinen Formel

$$Z_aSi(OR)_{4-a}$$

handeln, wobei Z einen Kohlenwasserstoffrest oder eine Polysiloxangruppe oder eine Gruppe der Formel

$$(RO)_3SiO$$

(R hat die oben dafür angegebene Bedeutung) und a 0 oder 1 bedeutet.

Bevorzugt sind selbstverständlich physiologisch unbedenkliche Triptych-Siloxazolidine, insbesondere solches, das aus Tetraethoxysilan und Triethanolamin hergestellt worden ist.

Bei der Umsetzung von Tetraethoxysilan mit Triethanolamin wird zunächst ein hochviskoses Öl erhalten, das nach einigem Stehen kristallisiert. Die so erhaltenen Kristalle können nach üblichen Methoden, z. B. durch Umkristallisieren gereinigt werden. Sie können aber auch ohne vorhergehende Reinigung bei der Bereitung der erfindungsgemäßen Überzugsmittel eingesetzt werden. In den erfindungsgemäßen Überzugsmitteln kann Triptych-Siloxazolidin aber auch in situ erzeugt werden, indem vor Zugabe vom teilchenförmigen Zink z. B. »Ethylsilikat 40« im Gemisch mit der Menge Triethanolamin, die der beabsichtigten Menge an Triptych-Siloxazolidin entspricht, erwärmt wird, bis die berechnete Menge an Ethanol abdestilliert ist.

Vorzugsweise enthalten die erfindungsgemäßen Überzugsmittel Triptych-Siloxazolidin in Mengen von 5 bis 60 Gewichtsprozent, bezogen auf das Gesamtgewicht von Kieselsäurealkylester und Alkylkieselsäurealkylester.

Zusätzlich zu Kieselsäurealkylester und/oder Alkylkieselsäurealkylester, teilchenförmigem Zink, Härtungskatalysator und organischem Lösungsmittel können die erfindungsgemäßen Überzugsmittel gegebenenfalls Zusätze enthalten, die in Überzugsmitteln auf Grundlage von Kieselsäurealkylester, teilchenförmigem Zink und Härtungskatalysator in organischem Lösungsmittel herkömmlich sind. Beispiele für solche herkömmlichen Zusätze sind Antiabsetzmittel, Verdickungsmittel, wie Montmorillonite oder Asbeste, andere Pigmente als teilchenförmiges Zink und Streckmittel, wie Talkum oder Glimmer, sowie zusätzliche Bindemittel, wie Polyacrylate oder Vinylpolymere, insbesondere Polyvinylbutyral.

Die Bereitung der erfindungsgemäßen Überzugsmittel durch Vermischen der Bestandteile kann nach in der Lackindustrie üblichen Arbeitsweisen erfolgen. Vorzugsweise wird Triptych-Siloxazolidin mit Kieselsäurealkylester und/oder Alkylkieselsäurealkylester vermischt, bevor weitere Bestandteile mit Kieselsäurealkylester und/oder Alkylkieselsäurealkylester vermischt werden.

Die erfindungsgemäßen Überzugsmittel sind ebenso wie die Überzugsmittel gemäß den eingangs genannten Druckschriften Einkomponenten-Systeme oder in einer einzigen Packung lagerfähig. Sie eignen sich insbesondere als Korrosionsschutzanstriche für Eisen und eisenhaltige Oberflächen.

Die erfindungsgemäßen Überzugsmittel können in üblicher Weise, z. B. durch Sprühen, Streichen, Aufwalzen oder Aufbürsten, auf die zu überziehenden Unterlagen aufgebracht werden.

In den folgenden Beispielen beziehen sich alle Angaben von Teilen und Prozentsätzen auf das Gewicht, soweit nichts anderes angegeben ist.

Beispiel 1

85 Teile »Ethylsilikat 40« (erhältlich bei der Wacker-Chemie GmbH unter der Bezeichnung »Wacker Silan TES 40«) werden mit 8,3 Teilen Triptych-Siloxazolidin, das aus Tetraethoxysilan und Triethanolamin hergestellt worden ist, vermischt. In das so erhaltene Gemisch werden 90,5 Teile Ethylglykolazetat als organisches Lösungsmittel, 14 Teile eines Antiabsetzmittels auf anorganischer Basis und 800,5 Teile Zinkstaub (sogenannter »Farbenzinkstaub«) eingemischt.

Das so erhaltene Überzugsmittel wird auf Stahlblech aufgestrichen, wo es innerhalb 15 Minuten bei Raumtemperatur zu einem bei Berührung trockenen Überzug härtet.

Nach 24 Stunden bei Raumtemperatur und 75% relativer Luftfeuchtigkeit sind zur Entfernung des Überzugs mittels eines mit Methylethylketon (MEK) getränkten Lappens 3 Doppelriebe erforderlich.

Beispiel 2

Die in Beispiel 1 beschriebene Arbeitsweise wird wiederholt mit den Abänderungen, daß anstelle der 85 Teile »Ethylsilikat 40« 75 Teile »Ethylsilikat 40« und anstelle der 8,3 Teile des Triptych-Siloxazolidins 23,3 Teile des gleichen Triptych-Siloxazolidins eingesetzt werden.

Nach 24 Stunden bei Raumtemperatur und 75% relativer Luftfeuchtigkeit sind zur Entfernung des Überzugs mittels des mit MEK getränkten Lappens 18 Doppelriebe erforderlich.

Beispiel 3

Die in Beispiel 1 beschriebene Arbeitsweise wird wiederholt mit den Abänderungen, daß anstelle der 85 Teile »Ethylsilikat 40« 65 Teile »Ethylsilikat 40« und anstelle der 8,3 Teile des Triptych-Siloxazolidins 38 Teile des gleichen Triptych-Siloxazolidins eingesetzt werden.

Nach 24 Stunden bei Raumtemperatur und 75% relativer Luftfeuchtigkeit sind zur Entfernung des Überzugs mittels des mit MEK getränkten Lappens 50 Doppelriebe erforderlich.

Die gemäß den Beispielen 1 bis 3 bereiteten Überzugsmittel sind in geschlossenen Behältern völlig beständig, was sich z. B. darin äußert, daß ihre Härtungsgeschwindigkeit bei der Anwendung gleichbleibt.

**Patentansprüche**

1. Überzugsmittel auf Grundlage von Kieselsäurealkylester und/oder Alkylkieselsäurealkylester, teilchenförmigem Zink und Härtungskatalysator in organischem Lösungsmittel, dadurch gekennzeichnet, daß sie als Härtungskatalysator mindestens eine Verbindung aus der Klasse der Triptych-Siloxazolidine enthalten.

2. Mittel nach Anspruch 1, dadurch gekennzeichnet, daß sie als Triptych-Siloxazolidin solches, das aus Tetraethoxysilan und Triethanolamin hergestellt worden ist, enthalten.

3. Mittel nach Anspruch 1 oder 2, dadurch gekennzeichnet, daß sie Triptych-Siloxazolidin in Mengen von 5 bis 60 Gewichtsprozent, bezogen auf das Gesamtgewicht von Kieselsäurealkylester und Alkylkieselsäurealkylester, enthalten.

**Claims**

1. Coating agents based on silicic acid alkyl ester and/or alkylsilicic acid alkyl ester, particulate zinc and a hardening catalyst in an organic solvent, characterised in that they contain, as the hardening catalyst, at least one compound selected from the class consisting of triptych-siloxazolidines.

2. Agents according to claim 1, characterised in that they contain, as the triptych-siloxazolidine, one that has been manufactured from tetraethoxysilane and triethanolamine.

3. Agents according to claim 1 or 2, characterised in that they contain the triptych-siloxazolidine in amounts of from 5 to 60% by weight, based on the total weight of silicic acid alkyl ester and alkylsilicic acid alkyl ester.

**Revendications**

1. Produits de revêtement à base d'un silicate d'alkyle et/ou d'un alkyl-silicate d'alkyle, de zinc en particules et d'un catalyseur de durcissement dans un solvant organique, produits caractérisés en ce qu'ils contiennent, comme catalyseur de durcissement, au moins un composé de la classe des triptycho-siloxazolidines.

2. Produits selon la revendication 1, caractérisés en ce qu'ils contiennent, comme triptycho-siloxazolidine, un composé de ce genre qui a été préparé à partir du tétrakis-éthoxy-silane et de la triéthanolamine.

3. Produits selon l'une des revendications 1 et 2, caractérisés en ce qu'ils contiennent la triptycho-siloxazolidine en des quantités de 5 à 60% en poids par rapport au poids total du silicate d'alkyle et de l'alkyl-silicate d'alkyle.